# FASCICULE DE BREVET EUROPEEN

(11) **EP 0 900 395 B1**
(45) Date de publication et mention de la délivrance du brevet: **13.03.2002**
(21) Numéro de dépôt: 97925100.6
(22) Date de dépôt: 16.05.1997
(51) Int. Cl.: G02B 3/00, G02B 1/00

(54) **PROCEDE DE CORRECTION DES ABERRATIONS D'UNE LENTILLE**
VERFAHREN ZUR KORREKTION VON FEHLERN IN EINER LINSE
METHOD FOR CORRECTING THE ABERRATIONS OF A LENS

(30) Priorité: 21.05.1996 FR 9606276
(43) Date de publication de la demande: 10.03.1999
(73) Titulaire: THALES ANGENIEUX S.A., F-42570 Saint Heand (FR)
(72) Inventeur: CORBASSON, Gérard,Thomson-CSF SCPI, F-94117 Arcueil Cedex (FR); BACCHUS, Jean-Marie,Thomson-CSF SCPI, F-94117 Arcueil Cedex (FR); NORY, Pierre,Thomson-CSF SCPI, F-94117 Arcueil Cedex (FR); REMONTET, Christophe,Thomson-CSF SCPI, F-94117 Arcueil Cedex (FR)
(74) Mandataire: Lincot, Georges
(86) Numéro de dépôt international: FR9700877
(87) Numéro de publication internationale: WO9744688

(56) Documents cités:
- EP-A- 0 241 558
- WO-A-91/01012
- FR-A- 2 419 523
- US-A- 3 486 808
- US-A- 4 758 071
- US-A- 4 810 070
- US-A- 4 930 880

## Description

La présente invention concerne les dispositifs optiques d'imagerie, dits objectifs, destinés par exemple à équiper des dispositifs de prise de vue, appelés caméras, et fournissant des images dans un domaine spectral étendu ("lumière blanche").

Dans l'état actuel de la technique, ces objectifs sont constitués d'une succession de lentilles sphériques centrées, composées de divers matériaux transparents dans le domaine spectral considéré, par exemple en verre pour les longueurs d'onde visibles, ou bien en Germanium, Silicium ou autres métalloïdes pour le domaine du proche infrarouge.

Selon des méthodes bien connues de l'homme de l'art, ces différentes lentilles qui composent ces objectifs d'imagerie sont appariées et réalisées dans des matériaux aux propriétés dispersives choisies pour corriger au mieux les aberrations du chromatisme dit longitudinal, qui résulte d'une variation de la longueur focale de l'objectif avec la longueur d'onde. On réalise ainsi ce qu'on appelle un repliement du spectre.

Toujours selon des méthodes bien connues de l'homme de l'art, on corrige également l'aberration d'ouverture, qui est sur l'axe l'aberration sphérique, par trois procédés : soit par combinaison d'un nombre suffisant de lentilles sphériques, soit par utilisation d'une ou de plusieurs surfaces asphériques, soit par l'utilisation de matériaux à gradient d'indice. On réalise ainsi une correction pour une longueur d'onde centrale.

Cependant, un inconvénient se manifeste sous la forme d'une variation importante et parasite de l'aberration sphérique avec la longueur d'onde ou, ce qui revient au même, de l'aberration chromatique avec l'ouverture, phénomène qui constitue le sphéro-chromatisme.

Ainsi pour un objectif infrarouge composé d'un doublet Silicium-Germanium dont les paramètres de construction sont donnés dans le tableau 1 suivant :

**Tableau 1**

| Rayon de courbure (mm) | Epaisseur (mm) | Matériau |
|---|---|---|
| +91,95 | 5 | Si |
| + 287,5 | 2 | |
| + 375,1 | 2 | Ge |
| + 175,4 | | |

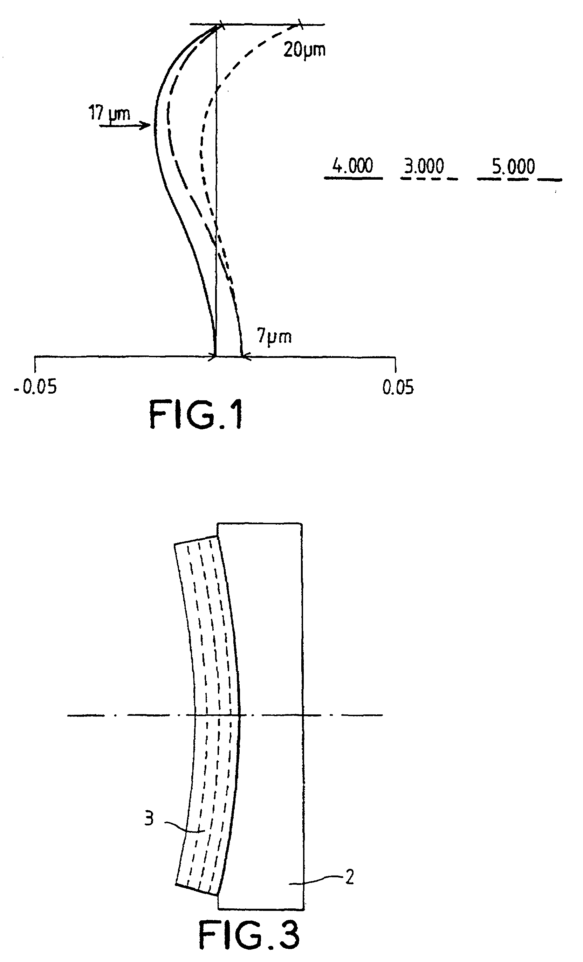

les courbes d'aberration sphéro-chromatique longitudinale, représentées sur la figure 1, mettent en valeur ce phénomène. Sur ces courbes, l'axe horizontal correspond à l'axe optique de la lentille et l'axe vertical à un axe perpendiculaire à l'axe optique de la lentille. Sur cet axe vertical, on rapporte la valeur du rayon de la pupille qui est disposée devant le doublet dans le sens du chemin optique. Pour un rayon de la pupille égal à 0, la courbe donne la valeur du chromatisme longitudinal résiduel, soit 7 microns dans le cas de l'exemple choisi. Pour un certain rayon de la pupille, on obtient une aberration maximum, soit une aberration sphérique résiduelle de 17 microns suivant la figure 1. Enfin pour un rayon maximum de la pupille, c'est-à-dire à pleine ouverture, on constate que la radiation la plus longue de longueur d'onde 5 microns est exactement corrigée de l'aberration sphérique, de même que la radiation centrale de longueur d'onde 4 microns. Mais à cette pleine ouverture, la radiation la plus courte, de longueur d'onde 3 microns, est affectée d'une aberration longitudinale de 20 microns, responsable de la chute de performance sensible de l'objectif à cette pleine ouverture.

Des procédés d'asphérisation par enlèvement de matière (par exemple usinage ou bombardement ionique) ou par apport de matière (dépôt sous vide d'une couche d'épaisseur variable, selon le brevet N° 7806422 déposé le 7 mars 1978 par la Demanderesse) sont connus, mais ils sont inopérants en matière de chromatisme.

Sont également connus des procédés d'obtention de matériaux à gradient d'indice, gradient radial ou longitudinal, par exemple par diffusion ionique comme par exemple dans le brevet américain US 4810070 ou par fusion.

Est également connu dans la demande de brevet européen EP 241558 un procédé de minimisation de certaines aberrations optiques d'une lentille dont l'aberration de coma, par le dépôt simultané sous vide de deux matériaux d'indices de réfraction différents, sous forme de couche, sur une face de la lentille.

Cependant, ces matériaux présentent certains inconvénients. Un premier inconvénient de ces matériaux à gradient d'indice, dans le cas du procédé par diffusion ionique, réside dans le fait que le nombre des matériaux susceptibles d'être ainsi diffusés est restreint, du fait de contraintes de compatibilité physico-chimique.

Un deuxième inconvénient de ces matériaux, dans le cas du procédé par fusions successives d'empilement de verres différents, réside dans des contraintes de dilatation thermique interdisant de choisir des verres de classes chimiques différentes, ce qui enlève pratiquement toute influence utile sur la correction des aberrations de chromaticité.

La présente invention se propose de remédier aux inconvénients précités.

A cet effet, l'invention a pour objet un procédé de minimisation de l'aberration sphérique et du sphérochromatisme d'une lentille défini par la revendication 1.

La couche réalisée est dotée d'une certaine puissance réfractive, du fait de sa variation d'épaisseur. De plus elle est dotée d'un effet sur le sphéro-chromatisme marginal (c'est-à-dire de pleine ouverture), du fait de la variation des matériaux qui la composent, cette variation se manifestant par une variation des propriétés réfractives et dispersives lorsque l'on se déplace depuis son centre vers sa périphérie. Dans le texte les termes propriétés dispersives, dispersion, gradient dispersif font référence à la loi de variation de l'indice de réfraction en fonction de la longueur d'onde.

D'autres caractéristiques et avantages de la présente invention apparaîtront plus clairement lors de la description qui suit, illustrée par les figures annexées qui représentent respectivement :
- la figure 1, des courbes d'aberrations sphériques longitudinales d'un doublet Silicium-Germanium, obtenu selon l'art antérieur,
- la figure 2, un dispositif pour un dépôt d'une couche à gradient dispersif, selon l'invention,
- la figure 3, un dépôt d'une couche à gradient dispersif sur une lentille, selon l'invention,
- la figure 4, une opération qui permet d'obtenir la puissance dioptrique de la couche, selon l'invention,
- la figure 5, des courbes d'aberrations sphériques longitudinales d'un doublet Silicium-Germanium obtenu selon l'invention.

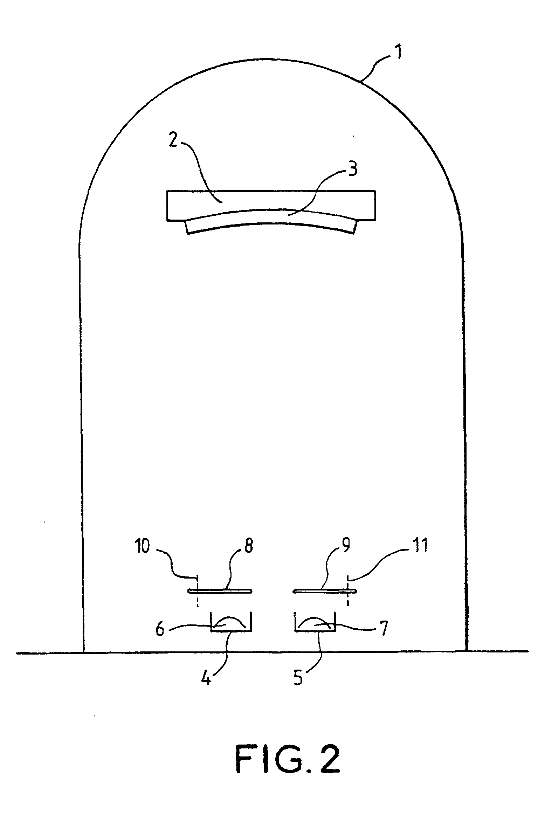

La figure 2 représente un dispositif utilisé pour un dépôt d'une couche à gradient dispersif. Une lentille 2 à traiter, revêtue sur ce dessin d'une couche déjà déposée 3 par un procédé d'évaporation sous vide est disposée sous une cloche à vide 1. Deux creusets 4 et 5 contiennent des matériaux de propriétés chromatiques dispersives différentes 6 et 7 et sont surmontés de deux caches dits masques d'ouverture 8 et 9 pivotant autour des axes 10 et 11.

Au fur et à mesure qu'une couche se dépose, sa composition varie par les mouvements contrôlés des deux caches qui voilent plus ou moins, en pivotant autour de leurs axes, les sources d'évaporation. Les mouvements des deux caches déterminent les flux respectifs de matière diffusée vers la lentille. Ces caches peuvent démasquer totalement les creusets, ou au contraire totalement les voiler. Ainsi, l'opérateur est libre de déposer à tout instant sur la lentille un mélange dont le pourcentage de chaque matériau peut varier entre deux extrêmes à savoir d'un mélange composé du premier matériau à l'état pur à un mélange composé du deuxième matériau à l'état pur. Entre ces deux compositions extrêmes, le mélange pourra être composé d'une proportion quelconque des deux matériaux.

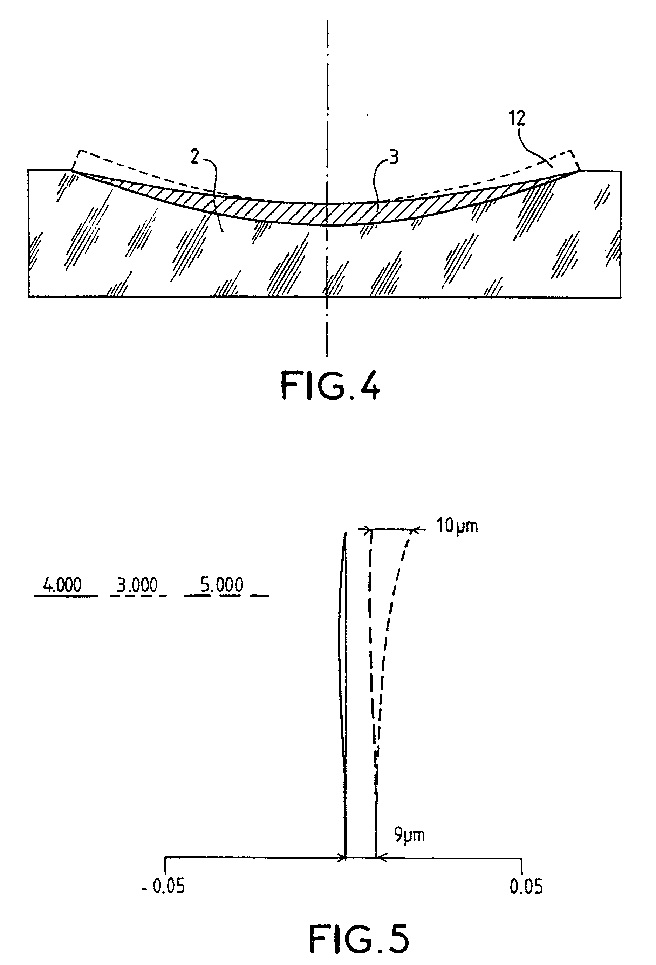

Au terme de cette opération de dépôt et comme illustré à la figure 3 où les éléments homologues à ceux de la figure 2 sont représentés avec les mêmes références, une lentille 2 est revêtue d'une couche à gradient dispersif 3 dont les propriétés optiques sont affectées d'un gradient en direction des sources, direction qui est voisine de la normale à la surface de la lentille. Ce gradient est dit sphérique, puisque la couche à gradient dispersif 3 est composée de sphères concentriques.

Aucun qualificatif relatif à l'épaisseur de la couche n'est attribué, car la présente invention ne se limite pas aux couches dites minces, ainsi qualifiées en général lorsque leurs épaisseurs sont de l'ordre de la longueur d'onde et qu'elles n'ont qu'une fonction interférentielle. Selon la présente invention, la couche à gradient dispersif peut avoir une épaisseur quelconque. A ce stade du procédé, la couche à gradient dispersif est équivalente à une lame à faces parallèles ou à faces concentriques.

La figure 4, où les éléments homologues à ceux de la figure 2 et de la figure 3 sont représentés avec les mêmes références, représente la deuxième partie d'un procédé ne faisant pas partie de l'invention. On a représenté une opération qui permet d'obtenir la puissance dioptrique de la couche à gradient dispersif par polissage et enlèvement de matière 12. La partie de la couche à gradient dispersif restant sur la lentille 2 prend alors la forme d'un ménisque 3 dans le cas d'une lentille à face concave. On parle alors de couche dioptrique à gradient dispersif.

Dans le mode de réalisation selon l'invention, une couche dioptrique à gradient dispersif est obtenue par un masquage supplémentaire au niveau de la lentille lors du dépôt (masquage du champ), selon le procédé décrit notamment dans le brevet cité précédemment, permettant d'obtenir une couche d'épaisseur variable en temps réel.

Afin de mieux comprendre l'avantage décisif procuré par une couche dioptrique à gradient d'indice ainsi obtenue, la figure 5 représente des courbes d'aberrations sphériques longitudinales d'un doublet Silicium-Germanium auquel une couche dioptrique à gradient d'indice a été accolée selon l'invention. La composition de la couche dioptrique à gradient d'indice varie linéairement sur une épaisseur de 55 microns, depuis le Sulfure de Zinc jusqu'au Séléniure de Zinc, comme précisé dans le tableau suivant qui donne les paramètres de construction de la lentille dans sa composition finale :

**Tableau 2**

| Rayon de courbure (mm) | Epaisseur (mm) | Matériau |
|---|---|---|
| ∞ | 0,055 | ZnS → ZnSe |
| - 5 682 | 0 | |
| + 89,11 | 5 | Si |
| + 255,9 | 2 | |
| + 292,9 | 2 | Ge |
| + 153,6 | | |

Il convient de comparer les courbes de cette figure 5 aux courbes représentées sur la figure 1 qui caractérisent le doublet Silicium-Germanium décrit dans l'art - antérieur. L'aberration sphérique résiduelle a été considérablement diminuée, le sphéro-chromatisme, à pleine ouverture entre les deux radiations extrêmes de 3 microns et 5 microns, a été réduit à 10 microns au lieu de 20 microns.

Le résultat industriel de cette couche dioptrique à gradient d'indice est de pratiquement supprimer l'aberration sphérique résiduelle et de diviser par deux le sphéro-chromatisme.

## Revendications

1. Procédé de minimisation de l'aberration sphérique et du sphérochromatisme d'une lentille (2) par dépôt sur une face de cette lentille (2) d'une couche (3) **caractérisé en ce que** le dépôt est réalisé par déposition simultanée sous vide de deux matériaux (6,7) choisis en fonction de leurs propriétés chromatiques dispersives différentes , **en ce que** la proportion relative de matière déposée provenant des matériaux est ajustée pendant le dépôt, et **en ce qu'**un masquage approprié de la lentille lors du dépôt module de manière contrôlée l'épaisseur de la couche (3).

2. Procédé selon la revendication 1, **caractérisé en ce que** le dépôt sous vide se fait par évaporation, bombardement ou pulvérisation.

3. Procédé selon la revendication 1, **caractérisé en ce que** le dépôt est réalisé au moyen d'une opération d'évaporation sous vide pendant laquelle la proportion relative de matière déposée provenant des matériaux est ajustée par le mouvement contrôlé d'un premier et d'un deuxième cache masquant respectivement un matériau et **en ce qu'**un troisième cache en rotation masque la lentille et permet d'obtenir, par un contrôle de son mouvement, la modulation de l'épaisseur de la couche déposée.

## Patentansprüche

1. Verfahren zur Minimierung der sphärischen Aberration und des Sphäro-Chromatismus einer Linse (2) durch Aufbringen einer Schicht (3) auf eine Seite der Linse (2), **dadurch gekennzeichnet, daß** das Aufbringen durch gleichzeitiges Abscheiden unter Vakuum von zwei Stoffen (6, 7) erfolgt, die aufgrund ihrer unterschiedlichen Eigenschaften der Farbstreuung ausgewählt werden, daß die relativen Anteile der beiden Stoffe während des Aufbringens eingestellt werden und daß eine geeignete Maskierung der Linse während des Aufbringens die Dicke der Schicht (3) auf kontrollierte Art moduliert.

2. Verfahren nach Anspruch 1, **dadurch gekennzeichnet, daß** das Aufbringen unter Vakuum durch Verdampfung, Partikelbeschuß oder Pulverisierung erfolgt.

3. Verfahren nach Anspruch 1, **dadurch gekennzeichnet, daß** das Aufbringen der Schicht durch Verdampfung im Vakuum geschieht, während der der relative Anteil der beiden Stoffe durch die kontrollierte Bewegung einer ersten und einer zweiten Maske eingestellt wird, die je einen Stoff abdecken, und daß eine dritte, drehende Maske die Linse abdeckt und die Modulation der Dicke der aufgebrachten Schicht durch eine geeignete.Steuerung der Bewegung dieser Maske zu erhalten erlaubt.

## Claims

1. Process for minimizing the spherical aberration and spherochromatism of a lens (2) by depositing a coating (3) on one face of this lens (2), **characterized in that** the deposition is carried out by the simultaneous vacuum deposition of two materials (6, 7) chosen according to their different dispersive chromatic properties, **in that** the relative proportion of substance deposited from the materials is adjusted during the deposition, and **in that** suitable masking of the lens during the deposition alters the thickness of the coating (3) in a controlled manner.

2. Process according to Claim 1, **characterized in that** the vacuum deposition is carried out by evaporation, bombardment or sputtering.

3. Process according to Claim 1, **characterized in that** the deposition is carried out by means of a vacuum evaporation operation during which the relative proportion of substance deposited from the materials is adjusted by controling the movement of a first and of a second mask masking a respective material and **in that** a third rotating mask masks the lens and makes it possible, by controlling its movement, to alter the thickness of the deposited coating.
